# EUROPÄISCHE PATENTSCHRIFT

(11) **EP 0 396 930 B1**
(45) Veröffentlichungstag und Bekanntmachung des Hinweises auf die Patenterteilung: **10.03.1993**
(21) Anmeldenummer: 90107075.5
(22) Anmeldetag: 12.04.1990
(51) Int. Cl.: B60R 1/06, B60R 1/08

(54) **Omnibus mit wenigstens drei Aussenspiegeln**
Bus with at least three exterior mirrors
Autobus avec au moins trois rétroviseurs extérieurs

(30) Priorität: 09.05.1989 DE 8905801 U
(43) Veröffentlichungstag der Anmeldung: 14.11.1990
(73) Patentinhaber: Karl Kässbohrer Fahrzeugwerke GmbH, D-89077 Ulm (DE)
(72) Erfinder: Papke, Wolfgang, D-7901 Staig 2 (DE)
(74) Vertreter: Grünecker, Kinkeldey, Stockmair & Schwanhäusser Anwaltssozietät

(56) Entgegenhaltungen:
- EP-A- 0 190 715
- DE-A- 3 302 735
- DE-A- 3 502 203
- FR-A- 2 622 521
- US-A- 3 644 021
- US-A- 4 778 265
- AUTOMOTIVE ENGINEER. vol. 6, no. 6, 01 Dezember 1981, BURY ST EDMUNDS GB Seiten 15 - 17; CASE ET AL: "DESIGN OF MIRROR SYSTEMS FOR COMMERCIAL VEHICLES"

## Beschreibung

Die Erfindung bezieht sich auf einen Omnibus mit wenigstens drei Außenspiegeln nach dem Oberbegriff des Patentanspruchs 1.

Ein Fahrzeug mit einem drei Außenspielgel umfassenden Formkörper ist aus der gattungsbildenden DE-A-3302735 bekannt. Die Außenspiegel sind durch Spiegelflächen gebildet, die aneinander stoßen und zueinander geneigt sind, um unterschiedliche Blickwinkel für den Fahrer zu ermöglichen. Der Formkörper ist im wesentlichen von rechteckiger Gestalt und mittels eines Arms seitlich am Fahrzeug einstellbar befestigt. Die Spiegelflächen können sowohl miteinander verbunden als auch durch Fugen getrennt sein.

Nachteilig bei diesem vorbekannten Fahrzeug mit Außenspiegel ist, daß eine separate Halterung für den Außenspiegel notwendig ist, welche für die Anordnung der Spiegelflächen nicht nutzbar ist. Weiterhin ist ungünstig, daß die bekannten Spiegelflächen durch Regen, Schmutzwasser oder anderen Niederschlag leicht verschmutzen und keine der Spiegelflächen vom Fahrersitz durch das Wischerfeld der Frontscheibe einsehbar ist. Dadurch ergeben sich Nachteile, insbesondere bei schlechten Sicht- und Witterungsverhältnissen.

Aus der EP-A-0190 715 ist ein Außenspiegel mit einer Spiegelfläche bekannt. Der verschwenkbare Haltearm des Außenspiegels kann als windschlüpfriges Flachteil und einteilig mit dem Außenspiegel ausgebildet sein. Auch bei diesem vorbekannten Außenspiegel wird eine separate Halterung (Haltearm) unabhängig vom eigentlichen Außenspiegel benötigt. Weiterhin ist der Außenspiegel in keiner Weise speziell geformt, um eine Verschmutzung durch Regen, Schmutzwasser oder anderen Niederschlag zu verhindern.

Der Erfindung liegt die Aufgabe zugrunde, einen Omnibus mit den Merkmalen des Oberbegriffs des Anspruchs 1 dahingehend zu verbessern, daß dieser einen einfach aufgebauten Außenspiegel aufweist, der einfach einstellbar und durch die Frontscheibe einsehbar ist, sowie zur effektiven Selbstreinigung geformt ist.

Diese Aufgabe wird erfindungsgemäß bei einem Omnibus der obenangegebenen Art durch die kennzeichnenden Merkmale des Patentanspruchs 1 gelöst.

Mit Hilfe des gemeinsamen L-förmigen Formkörpers ist eine kompakte Außenspiegelkonstruktion ohne einen separaten Haltearm erzielbar. Ein solcher Formkörper kann als hohler Schalenkörper ausgebildet werden und ist formsteif und vibrationsarm. Die Spiegelflächen der Außenspiegel sind je nach Bedarf in der Oberfläche des Formkörpers anortbar und sind nahezu vollständig von dem Formkörper umgeben, so daß die Außenspiegel in den Formkörper integriert und dadurch wirksam von schädigenden äußeren Einflüssen geschützt sind. Die Spiegelflächen sind insbesondere entsprechend zu der DE-A-33 02 735 so angeordnet, daß jede Spiegelfläche für den Fahrer einen anderen Blickwinkel ermöglicht, so daß der Einstieg und/oder die Achse, der seitliche Abstsand zwischen Omnibus und Fahrbahnbegrenzung sowie der normalerweise vom Fahrzeugrückspiegel erfaßte Bereich vom Fahrer beobachtet werden kann.

Besonders vorteilhaft ergibt sich ferner aufgrund der Gestaltung des Formkörpers, daß Regen, Spritzwasser vom vorausfahrenden Fahrzeug und/oder von der Frontscheibe nach hinten abströmendes Regenwasser durch den Fahrtwind selbstreinigend von den Spiegelflächen abströmen.

Der L-förmige Formkörper kann so am Omnibus angeordnet sein, daß sein erster Schenkel horizontal vom Bus absteht und an dessen Ende ein zweiter Schenkel sich vertikal nach unten erstreckt. Dieser vertikale Schenkel trägt den eigentlichen Rückspiegel. Bedingt durch diese Anordnung ergibt sich zwischen dem vertikalen Schenkel des Formkörpers und dem Chassis des Omnibusses eine Durchtrittsöffnung für die von der Frontscheibe abströmende Luft. Der hierdurch entstehende Düseneffekt wird im Sinne der Selbstreinigung der im Formkörper enthaltenen Spiegel ausgenutzt. Zu diesem Zweck ist der Formkörper aerodynamisch gestaltet, um diesen Düseneffekt zu begünstigen und zu optimieren. Dabei trägt auch der horizontale L-Schenkel bei, da er die Durchtrittsöffnung nach oben hin begrenzt. Die Selbstreinigungswirkung der Fahrzeugspiegel erhöht die Fahrsicherheit insbesondere bei schlechten Witterungs- und Sichtverhältnissen. Die Gefahr der Verschmutzung wird herabgesetzt.

Für den Fahrer ergibt sich der weitere Vorteil, daß er sämtliche Spiegel des Formkörpers mit einem Blick überschauen kann. Er hat damit alle durch die Spiegel wiedergegebenen interessanten Stellen seines Fahrzeuges konzentriert unter Beobachtung. Der Formkörper stellt deshalb auch unter diesem Gesichtspunkt ergonomisch eine optimale Lösung dar. Auf Wunsch kann der Formkörper so angeordnet sein, daß alle Spiegel durch das Wischfeld der Frontscheibe erfaßbar sind. Weiterhin besteht die Möglichkeit mit Hilfe einer zentralen Zuleitung auf Wunsch alle Spiegel zu heizen.

Mit Hilfe des gabelförmigen Grundelements ist der Formkörper in bezug auf eine horizontale Drehachse drehfest gehalten und mittels des Schwenklagers leicht in einer horizontalen Ebene zu verstellen.

Vorteilhaft ist ferner, daß der Formkörper in seinem vom Grundelement nach außen weisenden Bereich wenigstens drei jeweils mit Spiegelflächen versehene Spiegelelemente aufweist. Dadurch ist jeder Spiegelfläche eine besondere Funktion zugeordnet, die in der jeweiligen Spiegelfläche deutlich wiedergegeben und klar und eindeutig vom Fahrer abgelesen werden kann. Die sich in etwa parallel zur Omnibus-Längsachse ausgerichteten Spiegelflächen weisen einen relativ geringen Luftwiderstand auf, was sich günstig auf den Gesamtluftwiderstand des Omnibusses auswirkt.

Günstig ist ferner, daß jedes Spiegelelement eine separate Einstellachse zum Verschwenken der jeweiligen Spiegelfläche in wenigstens zwei zueinander senkrechten, in einer Ebene liegenden Schwenkrichtungen aufweist. Dadurch ist sichergestellt, daß jeder Außenspiegel unabhängig von den anderen Außenspiegeln, d.h. individuell, eingestellt werden kann. Es ist somit ein Verstellen eines Außenspiegels bei gleichzeitigem Beibehalten der Stellung der jeweils anderen Außenspiegel möglich. Da die Außenspiegel vollständig in den Formkörper integriert sind, ist auch ein elektrisches und/oder pneumatisches und/oder hydraulisches Verstellen der Spiegel möglich, da die einzelnen Antriebsachsen in den Formkörper integriert und, z.B. über Stellmotoren, angetrieben werden können, die über das Grundelement mit der elektrischen Anlage des Omnibusses verbunden sind.

Um die einzelnen Elemente strömungstechnisch günstig miteinander zu verbinden, und sorgfältig gegen Umwelteinflüsse abzudichten, ist es vorteilhaft, daß die einzelnen Elemente untereinander mit Hilfe von Ausgleichsgliedern verbunden sind. Diese Ausgleichsglieder, z.B. Faltenbälge, weisen darüber hinaus den Vorteil auf, daß sie auch eine Schwenkbewegung des gesamten Spiegelelements und nicht nur der Spiegelfläche gestatten. Auf diese Weise lassen sich diese Außenspiegel in weiten Grenzen verstellen und an den jeweiligen Fahrer anpassen.

Mit Hilfe des zwischen dem dritten Spiegelelement und dem Grundelement vorgesehenen Schwenklagers ist ein gemeinsames Verschwenken aller in dem Formkörper angeordneten Spiegelelemente relativ zum Grundelement und damit zum Omnibus sichergestellt. Damit ist es möglich, die Außenspiegel nicht nur individuell, sondern auch insgesamt zu verstellen, wenn deren Lage in bezug auf das Grundelement verändert werden soll. Besonders günstig ist es, die Spiegelelemente mit Hilfe des zwischen dem dritten Spiegelelement und dem Grundelement vorgesehenen Schwenklagers gemeinsam verstellen zu können. Vorteilhafterweise ist eine solche Einstellung elektrisch vom Fahrersitz aus möglich. Der Fahrer kann deshalb ohne die Fahrt zu unterbrechen schnell auf ein Verstellen der Außenspiegel, z.B. durch über der Fahrbahn hängende Zweige, reagieren.

Zweckmäßig ist ferner, daß jedes Spiegelelement eine abgerundete, in Fahrtrichtung weisende Vorderkante, eine etwa konvex gewölbte Oberseite, eine im Verhältnis zur Vorderseite relativ spitz zulaufende Hinterkante und eine relativ ebene Unterseite aufweist. Mit Hilfe eines solchen Tragflächenquerschnitts ist die Selbstreinigungswirkung der Spiegelflächen besonders einfach herstellbar. Die auf der Spiegelfläche befindlichen Flüssigkeitstropfen werden durch den Fahrtwind sofort nach hinten abgetragen, so daß die Spiegelflächen schon nach kurzer Zeit frei von Flüssigkeitsteilchen sind.

Vorteilhaft ist ferner, daß das Schwenklager des Formkörpers an der A-Säule so befestigt ist, daß der Formkörper in Fahrtrichtung gesehen, vor der Frontscheibe angeordnet und von dem Fahrersitz her durch das Wischerfeld der Frontscheibe einsehbar ist. Dadurch ist sichergestellt, daß die einzelnen Außenspiegel durch eine relativ geringe Kopfdrehung des Fahrers und auch bei schlechten Sicht- und Witterungsverhältnissen klar einsehbar sind. Dadurch ist eine erhebliche Steigerung der Fahrsicherheit, insbesondere bei ungünstigen Witterungsverhältnissen, gewährleistet. Da der Formkörper vor der Frontscheibe angeordnet ist, ist ein Benetzen der Außenspiegel durch von der Frontscheibe abströmende Wassertropfen weitgehend vermieden.

Ein Ausführungsbeispiel des Erfindungsgegenstandes wird nachfolgend anhand der Zeichnung näher erläutert. Es zeigen:
Fig. 1 einen Teil einer perspektivischen Frontansicht eines Omnibusses mit drei in einem Formkörper angeordneten Außenspiegeln in schematischer Darstellung;
Fig. 2 eine Vorderansicht des Formkörpers;
Fig. 3 eine Draufsicht auf den Formkörper gemäß Fig. 2;
Fig. 4 eine Seitenansicht des Formkörpers gemäß Fig. 2; und
Fig. 5 eine schematische Darstellung des mit drei Spiegelflächen versehenen Formkörpers.

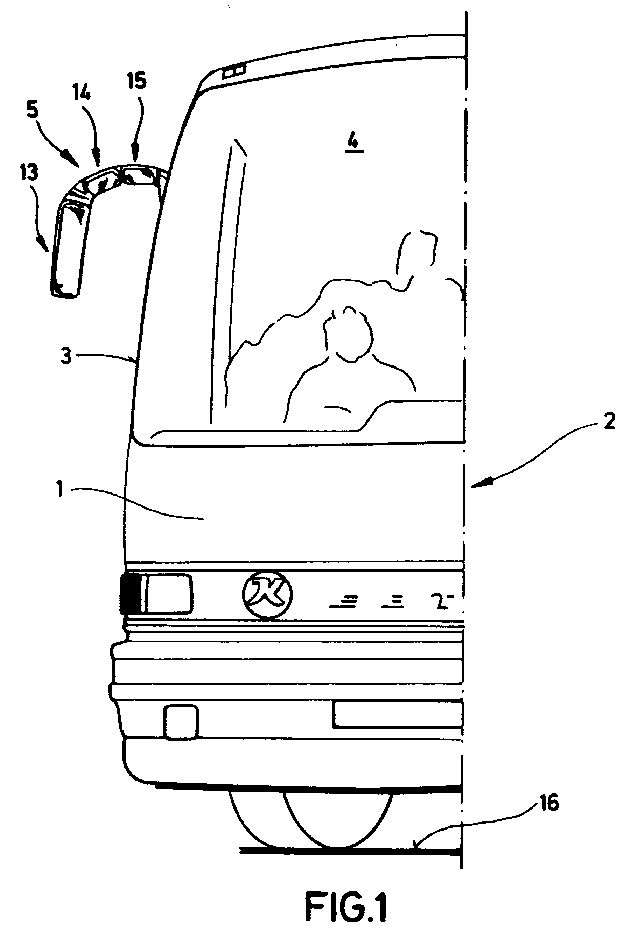

In Fig. 1 ist die in Fahrtrichtung gesehen rechte Frontseite 1 eines Omnibusses 2 schematisch dargestellt. An der rechten Außenseite 3 einer Frontscheibe 4 ist ein Formkörper 5 mit drei Außenspiegeln 13, 14 und 15 angebracht. Der Formkörper 5 ist in Höhe von etwa 2/3 der Gesamthöhe der Frontscheibe 4 von der Unterkante der Frontscheibe aus gesehen an der A-Säule des Omnibuschassis befestigt.

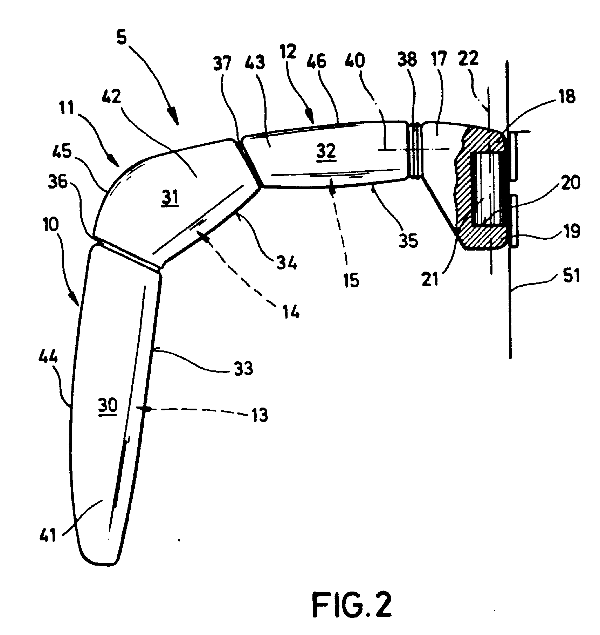

Der Formkörper 5 ist genauer in den Fig. 2 bis 4 dargestellt. Er besteht aus einem mehrteiligen, teilweise hohlen Schalenkörper, der - L-förmig gestaltet - einen in etwa vertikalen, längeren Abschnitt 10, einen zur Horizontalen geneigten Verbindungsabschnitt 11 und einen kurzen horizontalen oberen Abschnitt 12 aufweist. Den einzelnen Abschnitten 10 bis 12 sind jeweils Außenspiegel 13 bis 15 zugeordnet, wie nachfolgend noch genauer beschrieben wird. Wie den Fig. 2 bis 5 zu entnehmen ist, weist der Formkörper 5 eine allseits geschlossene Oberfläche auf, wobei die Außenspiegel 13 bis 15 einen Teil der zum Boden 16 (s. Fig. 1) bzw. zum Omnibus 2 weisenden Oberfläche bilden.

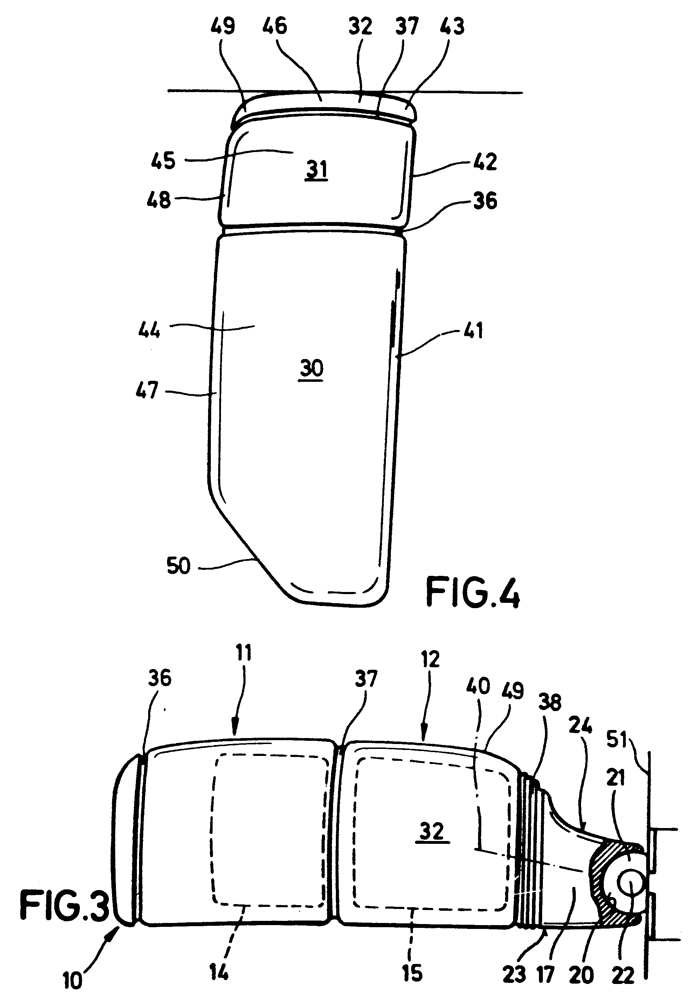

Zwischen dem Abschnitt 12 und dem Chassis weist der Formkörper 5 ein gabelförmiges Grundelement 17 mit einem oberen und unteren Gabelarm 18, 19 auf. Zwischen den Gabelarmen 18, 19 ist eine zum Chassis hin offene Ausnehmung 20 zum Aufnehmen eines Schwenklagers 21, mit dessen Hilfe der Formkörper am Omnibus 2 schwenkbar befestigt ist. Die Ausnehmung 20 ist in etwa halbkreisförmig ausgebildet (s. Fig. 3). Das Schwenklager 21 verfügt über eine vertikale Schwenkachse 22 mit einem oberen und unteren Ende auf, die jeweils in zylindrischen Sackbohrungen des oberen und unteren Gabelarms 18, 19 drehbar gelagert sind.

Gemäß Fig. 2 ist der horizontale obere Abschnitt 12 in etwa in Höhe des oberen Gabelarmes 18 mit Hilfe eines Schwenklagers 40 mit dem Grundelement 17 verbunden. Das Grundelement 17 weist gemäß Fig. 3 eine in etwa ebene, in Fahrtrichtung weisende vertikale Frontwand 23 und eine zum Omnibus-Heck weisende, in etwa konkav ausgebildete vertikale Rückwand 24 auf. Im Bereich des Schwenklagers 21 weisen Front- und Rückwand 23, 24 einen in etwa gleich großen Abstand zur vertikalen Schwenkachse 22 auf. Zur Hinterkante 49 des oberen Abschnitts 12 des Formkörpers 5 läuft die Rückwand 24 bogenförmig zu, so daß sich das Grundelement 17 zum Abschnitt 12 hin erweitert bzw. zum Omnibus 2 hin verjüngt, während die Frontwand 23 relativ gradlinig in den Abschnitt 12 übergeht. Dadurch erhält das Grundelement eine relativ ebene Frontwand 23 und eine konkav gekrümmte Rückwand 24.

In seinem vom Grundelement 17 nach außen weisenden Bereich weist der Formkörper 5 den Abschnitten 10 bis 12 entsprechende Spiegelelemente 30 bis 32 auf, an deren zum Boden 16 bzw. zum Omnibus 2 weisenden Unterseiten jeweils die Außenspiegel 13 bis 15 mit den entsprechenden Spiegelflächen 33 bis 35 so vorgesehen sind, daß die Spiegelflächen 33 bis 35 in etwa bündig mit dem entsprechenden Spiegelelement abschließen. Die Spiegelflächen 33 bis 35 erstrecken sich in etwa parallel zur Omnibus-Längsachse, wobei die einzelnen Spiegelelemente 30 bis 32 entsprechend der L-förmigen Gestalt des Formkörpers 5 nahezu vertikal bzw. stark geneigt bzw. horizontal ausgerichtet sind. Das erste Spiegelelement 30 kann in etwa vertikal, z.B. mit einem Winkel von 10°, leicht geneigt sein, während das zweite Spiegelelement 31 zur Horizontalen, z.B mit einem Winkel zwischen 25 und 50°, stark geneigt angeordnet ist. Das obere Spiegelelement 32 ist nahezu horizontal ausgerichtet. Daraus folgt, daß der erste Außenspiegel 13 als Fahrzeugrückspiegel, der zweite Außenspiegel 14 zum Betrachten von Einstieg und Achse und der dritte Außenspiegel 15 zum Beobachten des seitlichen Abstands zwischen Omnibus und Fahrbahnbegrenzung, d.h. als sogenannter "Spion", vorgesehen ist.

Jedes Spiegelelement 30 bis 32 weist eine nicht näher dargestellte separate Einstellachse zum Verschwenken der jeweiligen Spiegelfläche in wenigstens zwei zueinander senkrechten, in einer Ebene liegenden Schwenkrichtungen auf. So ist die Spiegelfläche 35 des Spiegelelements 32 gemäß Fig. 2 um eine zur Zeichenebene senkrechte Schwenkachse schwenkbar, d.h. die Spiegelfläche kann einmal näher zum Omnibus 2, zum andern von diesem weg zur Fahrbahnbegrenzung verschwenkt werden. Außerdem ist ein Verschwenken der Spiegelfläche 35 in einer in der Zeichenebene, quer zur Omnibus-Längsachse angeordneten Schwenkachse, d.h. ein Verschwenken senkrecht zur Zeichenebene möglich. Dabei kann die Spiegelfläche 35 einmal mehr zur Fahrzeug-Frontseite 1, zum andern mehr zum Fahrzeugheck weisend eingestellt werden. Zum Einstellen der einzelnen Spiegelelemente 30 bis 32 können elektrische und/oder pneumatische und/oder hydraulische Antriebe in dem Formkörper 5 vorgesehen sein, die vom Fahrersitz oder von einer anderen im Inneren des Omnibusses 2 angeordneten Stelle aus betätigbar sind. Es ist aber auch möglich, die einzelnen Spiegelflächen bei feststehendem Spiegelelement oder die Spiegelelemente bei relativ zum Spiegelelement feststehenden Spiegelflächen zu verstellen.

Grund- und Spiegelelemente 17, 30 bis 32 sind untereinander jeweils mittels Ausgleichsgliedern 36 bis 38 verbunden, um Relativbewegungen zwischen den einzelnen Elementen wirksam so auszugleichen, daß der Formkörper 5 weiterhin eine allseits geschlossene Oberfläche aufweist. Gemäß Fig. 2 und 3 ist das Ausgleichsglied 38 als Faltenbalg ausgebildet. Vorzugsweise bestehen die Ausgleichsglieder aus einem dehnfähigen Material und überbrücken den Abstand zwischen den einzelnen Spiegelelementen bzw. zwischen dem Spiegelelement 32 und dem Grundelement 17 derart, daß die einzelnen Elemente nahtlos und gleichmäßig ineinander übergehen.

Zwischen dem dritten Spiegelelement 32 und dem Grundelement 17 ist das Schwenklager 40 zum Zwecke des gemeinsamen Verschwenkens der Spiegelelemente 30 bis 32 relativ zum Grundelement 17 angeordnet (in Fig. 2 und 3 nur schematisch dargestellt). Mit Hilfe des Schwenklagers 40 können die drei Spiegelelemente gleichzeitig verschwenkt werden, wobei das Schwenklager 40 so ausgestaltet ist, daß ein Verschwenken in horizontaler und/oder vertikaler Richtung möglich ist. Ebenso wie die einzelnen Spiegelelemente kann das Schwenklager mit Hilfe eines elektrischen und/oder pneumatischen und/oder hydraulischen Antriebs betätigt werden, der vom Fahrersitz oder einer anderen im Inneren des Omnibusses 2 angeordneten Stelle betätigbar ist. Es ist ferner möglich, das Schwenklager wahlweise auch manuell zu betätigen.

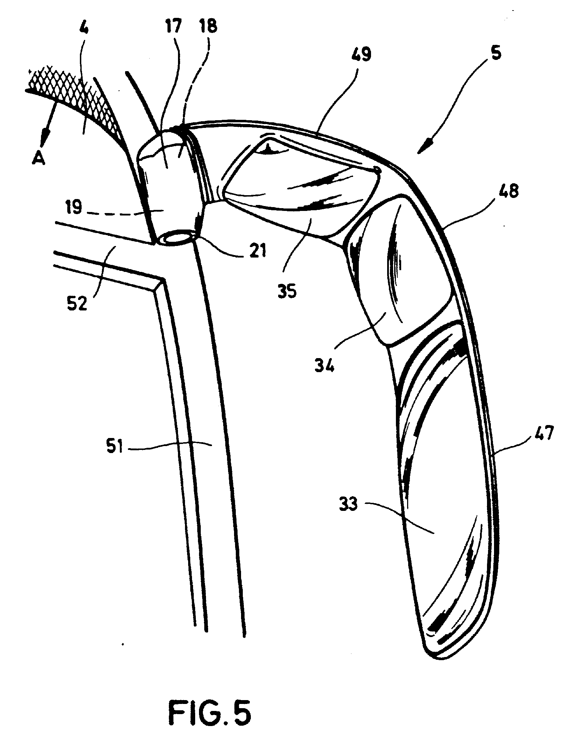

Gemäß den Fig. 2 und 5 weist jedes Spiegelelement 30 bis 32 eine abgerundete, stark gewölbte, in Fahrtrichtung weisende Vorderkante 41 bis 43, eine bauchig, etwa konvex gewölbte Oberseite 44 bis 46, eine im Verhältnis zur Vorderkante 41 bis 43 relativ spitz zulaufende Hinterkante 47 bis 49 und eine relativ ebene, die Spiegelflächen 33 bis 35 bildende Unterseite auf. Die in der jeweiligen Unterseite sitzenden Spiegelflächen 33 bis 35 können in Abhängigkeit von dem zu betrachtenden Gegenstand konkav und/oder konvex und/oder auch nicht gekrümmt ausgebildet sein.

Gemäß Fig. 4 weist die Hinterkante 47 des Spiegelelements 30 eine Abflachung 50 auf, die im hinteren, zum Boden 16 weisenden Bereich des Spiegelelements angeordnet ist. Wie in Fig. 5 gezeigt, ist das zwischen dem oberen und unteren Gabelarm 18, 19 des Grundelements 17 sitzende Schwenklager 21 des Formkörpers 5 an der A-Säule 51 oberhalb eines Türholms 52 so befestigt, daß der Formkörper 5 in Fahrtrichtung gesehen vor der Frontscheibe 4 angeordnet und vom Fahrersitz her durch das Wischerfeld (s. Pfeil A in Fig. 5) der Frontscheibe 4 einsehbar ist.

Es ist auch möglich, das Schwenklager 21 an einer anderen Stelle so anzuordnen, daß die Außenspiegel vom Fahrersitz her durch das Wischerfeld gut einsehbar sind. Außerdem können die Schwenklager 21 und 40 bzw. die Schwenkachse 22 mit Rasten versehen sein, in denen Gegenrasten zum Festhalten des Formkörpers in bestimmten Stellungen eingreifen. Die Antriebe zum Verstellen der Außenspiegel können im Formkörper aber auch im Innern des Omnibusses angeordnet sein. Darüber hinaus ist es möglich, eine Heizung für die Außenspiegel vorzusehen.

Nachfolgend wird die Funktion des mit drei Außenspiegeln versehenen Formkörpers näher beschrieben:
Bei engen Platzverhältnissen kann der Formkörper um das Schwenklager 21 nach hinten oder nach vorne zum Fahrzeug verschwenkt sein. Vor beginnender oder fortsetzender Fahrt wird der Formkörper um das Schwenklager so verschwenkt, daß der Formkörper vor der Frontscheibe mit seitlichem Abstand zum Omnibus angeordnet ist. Eine Grobabstimmung kann darüber hinaus mit Hilfe des zwischen Spiegelelement 32 und Grundelement 17 sitzenden Schwenklagers 40 so erfolgen, daß der Formkörper 5 zumindest ungefähr auf den Fahrersitz eingestellt wird. In Abhängigkeit von der Größe des Fahrers werden anschließend die drei Außenspiegel 13 bis 15 einer Feineinstellung so unterzogen, daß mit Hilfe des Außenspiegels 13 die gesamte Fahrzeuglänge und Fahrzeughöhe, mit Hilfe des Außenspiegels 14 die Vorderachse und der Einstieg und mit Hilfe des Außenspiegels 15 der Abstand zwischen Fahrzeug und seitlicher Fahrbahnbegrenzung, z.B einem Bordstein, beobachtet werden kann. Wird das Fahrzeug einem anderen Fahrer übergeben, wiederholen sich die einzelnen Einstellschritte, bis alle Spiegel dann auf den neuen Fahrer optimal eingestellt sind. Es ist auch möglich, die einzelnen Spiegeleinstellungen zu programmieren und für jeden Fahrer abrufbar einzuspeichern.

## Patentansprüche

1. Omnibus mit wenigstens drei im Bereich seiner Frontseite angeordneten Außenspiegeln, von denen ein erster (13) als Fahrzeugrückspiegel, ein zweiter (14) zum Betrachten von Einstieg und/oder Achse und ein dritter (15) zum Beobachten des seitlichen Abstands zwischen Omnibus und Fahrbahnbegrenzung vorgesehen ist, wobei die Außenspiegel an einem gemeinsamen Formkörper (5) mit allseits geschlossener Oberfläche angeordnet sind und einen Teil der Oberfläche bilden, **dadurch gekennzeichnet,** daß der Formkörper (5) L-förmig ausgebildet ist, wobei ein L-Schenkel des Formkörpers (5) am Fahrzeug (1) schwenkbar gelagert ist und zumindest der andere L-Schenkel einer Frontscheibe (4) des Fahrzeugs (1) vorgeordnet ist, und der Formkörper zum Zwecke der Selbstreinigung der Spiegel eine aerodynamische Gestalt mit Tragflächenquerschnitt aufweist, wobei der Formkörper eine abgerundete, in Fahrtrichtung weisende Vorderkante(41, 42, 43), eine etwa konvex gewölbte Auffenseite (44, 45, 46), eine im Verhältnis zur Vorderkante relativ spitz zulaufende Hinterkante (47, 48, 49) und eine relativ ebene Innenseite aufweist.

2. Omnibus nach Anspruch 1, **dadurch gekennzeichnet,** daß der dem Fahrzeug (1) zugeornete L-Schenkel mit einem Grundelement (17) des Formkörpers (5) verbunden ist, das mit Hilfe eines Schwenklagers (21) am Omnibus (2) befestigt ist.

3. Omnibus nach Anspruch 2, **dadurch gekennzeichnet,** daß das Grundelement (17) an seiner zum Omnibus (2) weisenden Seite gabelförmig mit einem oberen und unteren Gabelarm (18, 19) ausgebildet ist.

4. Omnibus nach Anspruch 3, **dadurch gekennzeichnet,** daß das Grundelement (17) zwischen den Gabelarmen (18, 19) eine zum Omnibus (2) offene Ausnehmung (20) zum Aufnehmen des Schwenklagers (21) aufweist.

5. Omnibus nach Ansprüche 3 oder 4, **dadurch gekennzeichnet,** daß das Schwenkalger (21) eine vertikale, am Omnibus befestigte Schwenkachse (22) aufweist, deren oberes und unteres Ende in dem oberen und unteren Gabelarm (18, 19) drehbar gelagert ist.

6. Omnibus nach einem der Ansprüche 2 bis 5, **dadurch gekennzeichnet,** daß das Grundelement (17) eine zum Omnibus-Heck weisende, in etwa konkav ausgebildete Rückwand (24) aufweist, die so ausgebildet ist, daß sich das Grundelement (17) zum Omnibus (2) verjüngt.

7. Omnibus nach einem der Ansprüche 2 bis 6, **dadurch gekennzeichnet,** daß der Formkörper (5) in seinem vom Grundelement (17) nach außen weisenden Bereich wenigstens drei, einander nachgeordnete, jeweils mit Spielgelflächen (33, 34, 35) versehene Spielgelemente (30, 31, 32) aufweist.

8. Omnibus nach Anspruch 7, **dadurch gekennzeichnet,** daß das erste Spielgelement (30) im wesentlichen vertikal, das zweite Spielgelement (31) unter etwa 45° geneigt und das dritte Spielgelement (32) im wesentlichen horizontal im Formkörper (5) angeordnet ist.

9. Omnibus nach Ansprüche 7 oder 8, **dadurch gekennzeichnet,** daß jedes Spielgelement (30, 31, 32) eine separate Einstellachse zum Lagern und zum Verschwenden der jeweiligen Spiegelfläche in wenigstens zwei zueinander senkrechten, in einer Ebene liegenden Schwenkrichtungen aufweist.

10. Omnibus nach einem der Ansprüche 7 bis 9, **dadurch gekennzeichnet,** daß die Spielgelement (30, 31, 32) unabhängig voneinander und vom Grundelement (17) manuell und/oder elektrisch und/oder pneumatisch und/oder hydraulisch einstellbar sind.

11. Omnibus nach Anspruch 10, **dadurch gekennzeichnet,** daß die einzelnen, einander nachgeordneten und jeweils an den benachbarten Elementen einstellbar gehaltenen Elemente (17, 30, 31, 32) untereinander mit Hilfe von Ausgleichsgliedern (36, 37, 38) verbunden sind.

12. Omnibus nach Anspruch 11, **dadurch gekennzeichnet,** daß die Ausgleichsglieder (36, 37, 38) Faltenbälge sind.

13. Omnibus nach Ansprüche 11 oder 12, **dadurch gekennzeichnet,** daß das zwischen dem dritten Spielgelement (32) und dem Grundelement (17) vorgesehene Ausgleichsglied (38) ein Schwenklager (40) zum Zwecke des gemeinsamen Verschwenkens der Spielgelement (30, 31, 32) relativ zum Grundelement (17) in horizontaler und/oder vertikaler Richtung aufweist.

14. Omnibus nach Anspruch 13, **dadurch gekennzeichnet,** daß das Schwenklager (40) manuell und/oder elektrisch und/oder pneumatisch und/oder hydraulisch betätigbar ist.

15. Omnibus nach einem der Ansprüche 2 bis 14, **dadurch gekennzeichnet,** daß das Schwenklager (21) des Formkörpers (5) an der A-Säule (51) so befestigt ist, daß der Formkörper (5) in Fahrtrichtung gesehen vor der Frontscheibe (4) angeordnet und von dem Fahrersitz her durch das Wischerfeld der Frontscheibe einsehbar ist.

16. Omnibus nach einem der vorhergehenden Ansprüche, **dadurch gekennzeichnet,** daß der Formkörper (5) als Schalenkörper ausgebildet und weningstens teilweise hohl ist.

## Claims

1. Bus with at least three exterior mirrors arranged in the region of its front side, of which a first mirror (13) is provided as a vehicle rear-view mirror, a second mirror (14) is intended for viewing boarding and/or axle and a third mirror (15) is intended for observing the lateral clearance between bus and carriageway limitation, the exterior mirrors being arranged on a common moulded body (5) having a surface enclosed on all sides and forming part of the surface, characterised in that the moulded body (5) is designed in the form of an L, one L-leg of the moulded body (5) being mounted on the vehicle (1) in such a way that it can swivel and at least the other L-leg being arranged ahead of a front windscreen (4) of the vehicle (1), and the moulded body having for the purpose of self-cleaning of the mirrors an aerodynamic shape of aerofoil cross-section, the moulded body having a rounded-off front edge (41, 42, 43), facing in the direction of travel, an approximately convexly curved outer side (44, 45, 46), a rear edge (47, 48, 49), tapering relatively sharply in relation to the front edge, and a relatively planar inner side.

2. Bus according to Claim 1, characterised in that the L-leg assigned to the vehicle (1) is connected to a basic element (17) of the moulded body (5), which element is fastened on the bus ( 2 ) with the aid of a swivel bearing (21).

3. Bus according to Claim 2, characterised in that the basic element (17) is designed on its side facing the bus (2) in the form of a fork having an upper and lower fort arm (18, 19).

4. Bus according to Claim 3, characterised in that the basic element (17) has between the fork arm (18, 19) a recess (20) which is open towards the bus (2) and is for receiving the swivel bearing (21).

5. Bus according to Claims 3 or 4, characterised in that the swivel bearing (21) has, fastened on the bus, a vertical swivel spindle (22), the upper and lower end of which is rotatably mounted in the upper and lower fort arm (18, 19).

6. Bus according to Claims 2 to 5, characterised in that the basic element (17) has an approximately concavely designed rear wall (24), facing the rear of the bus, which wall is designed in such a way that the basic element (17) tapers towards the bus (2).

7. Bus according to one of Claims 2 to 6, characterised in that the moulded body (5) has in its region facing outwards from the basic element (17) at least three mirror elements (30, 31, 32), arranged one after the other and in each case provided with mirror surfaces (33, 34, 35).

8. Bus according to Claim 7, characterised in that the first mirror element (30) is arranged substantially vertically, the second mirror element (31) is arranged inclined at about 45° and the third mirror element (32) is arranged substantially horizontally in the moulded body (5).

9. Bus according to Claims 7 or 8, characterised in that each mirror element (30, 31, 32) has a separate setting spindle for mounting and for swivelling the respective mirror surface in at least two mutually perpendicular swivelling directions lying in one plane.

10. Bus according to one of Claims 7 to 9, characterised in that the mirror elements (30, 31, 32) can be set manually and/or electrically and/or pneumatically and/or hydraulically independently of one another and of the basic element (17).

11. Bus according to Claim 10, characterised in that the individual elements (17, 30, 31, 32), arranged one after the other and in each case held on the neighbouring elements in such a way that they can be set, are connected to one another with the aid of compensating elements (36, 37, 38).

12. Bus according to Claim 11, characterised in that the compensating elements (36, 37, 38) are bellows.

13. Bus according to Claims 11 or 12, characterised in that the compensating element (38) provided between the third mirror element (32) and the basic element (17) has a swivel bearing (40) for the purpose of joint swivelling of the mirror elements (30, 31, 32) relative to the basic element (17) in the horizontal and/or vertical direction.

14. Bus according to Claim 13, characterised in that the swivel bearing (40) can be actuated manually and/or electrically and/or pneumatically and/or hydraulically.

15. Bus according to one of Claims 2 to 14, characterised in that the swivel bearing (21) of the moulded body (5) is fastened on the A pillar (51) in such a way that the moulded body (5) is arranged ahead of the front windscreen (4), seen in the direction of travel, and can be viewed from the driver's seat through the wiper area of the front windscreen.

16. Bus according to one of the preceding claims, characterised in that the moulded body (5) is designed as a shell body and is at least partially hollow.

## Revendications

1. Autobus avec au moins trois rétroviseurs extérieurs disposés dans la région de sa face frontale, dont un premier rétroviseur (13) est prévu comme rétroviseur du véhicule, un second rétroviseur (14) servant à l'observation de l'entrée et/ou de l'essieu et un troisième rétroviseur (15) permettant l'observation de la distance latérale entre l'autobus et la limitation de la chaussée, les rétroviseurs extérieurs étant disposés sur un corps moulé (5) commun avec une surface fermée de tous côtés et formant une partie de la surface, **caractérisé en ce** que le corps moulé (5) présente une forme en L, l'une des branches du L du corps moulé (5) étant montée de manière pivotante sur le véhicule (1) et au moins l'autre branche du L étant placée en avant d'un pare-brise (4) du véhicule (1), et le corps moulé présentant, en vue de l'autonettoyage des rétroviseurs, une forme aérodynamique avec une section transversale des surfaces d'appui, le corps moulé comprenant un bord antérieur (41, 42, 43) arrondi dirigé dans le sens de la marche, une surface extérieure (44, 45, 46) à courbure sensiblement convexe, un bord postérieur (47, 48, 49) relativement effilé par rapport au bord antérieur et une face intérieure relativement plane.

2. Autobus selon la revendication 1, caractérisé en ce que la branche du L associée au véhicule (1) est raccordée à un élément de base (17) du corps moulé (5) qui est monté sur l'autobus (2) à l'aide d'un palier pivotant (21).

3. Autobus selon la revendication 2, caractérisé en ce que, du côté dirigé vers l'autobus (2), l'élément de base (17) est conformé en fourche avec des bras de fourche supérieur et inférieur (18, 19).

4. Autobus selon la revendication 3, caractérisé en ce que l'élément de base (17) comporte, entre les bras de fourche (18, 19) un évidement (20) ouvert vers l'autobus (2) et destiné à recevoir le palier pivotant (21).

5. Autobus selon l'une des revendications 3 ou 4, caractérisé en ce que le palier pivotant (21) comprend un axe de pivotement (22) vertical fixé sur l'autobus, dont les extrémités supérieure et inférieure sont montées de manière tournante dans les bras de fourche supérieur et inférieur (18, 19).

6. Autobus selon l'une des revendications 2 à 5, caractérisé en ce que l'élément de base (17) comprend une paroi arrière (24) sensiblement concave dirigée vers l'arrière de l'autobus et conformée de telle façon que l'élément de base (17) se rétrécit en direction de l'autobus (2).

7. Autobus selon l'une des revendications 2 à 6, caractérisé en ce que le corps moulé (5) comprend, dans sa partie dirigée vers l'extérieur à partir de l'élément de base (17), au moins trois éléments rétroviseurs (30, 31, 32) successifs respectivement munis de surfaces de miroir (33, 34, 35).

8. Autobus selon la revendication 7, caractérisé en ce que le premier élément rétroviseur (30) est sensiblement vertical, que le second élément rétroviseur (31) est incliné sous un angle d'environ 45° et que le troisième élément rétroviseur (32) est disposé sensiblement horizontalement dans le corps moulé (5).

9. Autobus selon l'une des revendications 7 ou 8, caractérisé en ce que chaque élément rétroviseur (30, 31, 32) comporte un axe de pivotement séparé pour le montage et le pivotement de la surface de miroir respective dans au moins deux directions de pivotement perpendiculaires situées dans un même plan.

10. Autobus selon l'une des revendications 7 à 9, caractérisé en ce que les éléments rétroviseurs (30, 31, 32) peuvent être réglés indépendamment les uns des autres et de l'élément de base (17) de manière manuelle et/ou électrique et/ou pneumatique et/ou hydraulique.

11. Autobus selon la revendication 10, caractérisé en ce que les différents éléments (17, 30, 31, 32) disposés en succession et respectivement maintenus de manière réglable sur les éléments voisins, sont raccordés les uns aux autres à l'aide d'organe de compensation (36, 37, 38).

12. Autobus selon la revendication 11, caractérisé en ce que les organes de compensation (36, 37, 38) sont des soufflets.

13. Autobus selon l'une des revendications 10 à 12, caractérisé en ce que l'organe de compensation (38) prévu entre le troisième élément rétroviseur (32) et l'élément de base (17) comprend un palier pivotant (40) pour le pivotement commun des éléments rétroviseurs (30, 31, 32) par rapport à l'élément de base (17) dans les sens horizontal et/ou vertical.

14. Autobus selon la revendication 13, caractérisé en ce que le palier pivotant (40) peut être commandé manuellement et/ou électriquement et/ou pneumatiquement et/ou hydrauliquement.

15. Autobus selon l'une des revendications 2 à 14, caractérisé en ce que le palier pivotant (21) du corps moulé (5) est monté sur la colonne A (51) de manière que le corps moulé (5) se trouve, vu dans la direction de marche, en avant du pare-brise (4) et peut être observé à partir du siège du conducteur au travers de la zone du pare-brise couverte par l'essuie-glace.

16. Autobus selon l'une des revendications précédentes, caractérisé en ce que le corps moulé (5) présente une forme de coque et qu'il est creux au moins en partie.
